# FASCICULE DE BREVET EUROPEEN

(11) **EP 3 555 004 B1**
(45) Date de publication et mention de la délivrance du brevet: **28.06.2023**
(21) Numéro de dépôt: 17821987.9
(22) Date de dépôt: 13.12.2017
(51) Int. Cl.: C02F 1/28, C02F 1/70, B01J 20/02, B01J 20/32, C02F 1/42, C02F 101/20

(54) **MÉLANGE DE TRAITEMENT D'EAU POLLUÉE AU MERCURE, DISPOSITIF DE TRAITEMENT D'EAU POLLUÉE AU MERCURE UTILISANT UN TEL MÉLANGE ET PROCÉDÉ DE TRAITEMENT D'EAU POLLUÉE AU MERCURE AU MOYEN D'UN TEL DISPOSITIF**
MISCHUNG ZUR BEHANDLUNG VON MIT QUECKSILBER VERSCHMUTZTEM WASSER, VORRICHTUNG ZUR BEHANDLUNG VON MIT QUECKSILBER VERSCHMUTZTEM WASSER MIT SOLCH EINER MISCHUNG UND VERFAHREN ZUR BEHANDLUNG VON MIT QUECKSILBER VERSCHMUTZTEM WASSER MITTELS SOLCH EINER VORRICHTUNG
MIXTURE FOR TREATING MERCURY-POLLUTED WATER, DEVICE FOR TREATING MERCURY-POLLUTED WATER USING SUCH A MIXTURE AND METHOD FOR TREATING MERCURY-POLLUTED WATER BY MEANS OF SUCH A DEVICE

(30) Priorité: 13.12.2016 FR 1662354
(43) Date de publication de la demande: 23.10.2019
(73) Titulaire: SUEZ RR IWS Remediation France, 69330 Meyzieu (FR)
(72) Inventeur: DEVIC-BASAGET, Boris, 89700 Tonnerre (FR); ROMANO, Amandine, 42660 Saint Romain les Atheux (FR); RICHARD, Jean-Yves, 69780 Toussieu (FR)
(74) Mandataire: Santarelli
(86) Numéro de dépôt international: PCT/FR2017/053543
(87) Numéro de publication internationale: WO 2018/109378

(56) Documents cités:
- WO-A1-2005/061391
- CH-A5- 625 491
- US-A- 5 635 073
- US-A1- 2007 017 871
- US-A1- 2007 104 949
- US-A1- 2011 174 743
- US-A1- 2011 309 021

## Description

La présente demande concerne un mélange de traitement d'eau polluée au mercure.

Elle concerne également un dispositif de traitement d'eau polluée au mercure utilisant un tel mélange.

Elle concerne aussi un procédé de traitement d'eau polluée au mercure au moyen d'un tel dispositif.

Une « eau » s'entend ici au sens large, tout effluent industriel, toute eau de nappe phréatique, canal, rivière, fleuve, torrent, lac, voire mer, océan etc., naturelle ou artificielle.

En effet, il se peut qu'une eau, dans la nature, soit polluée par du mercure, même si en général les impacts en mercure proviennent d'activité industrielle telle que des anciennes usines d'électrolyse du sel, d'extraction minière ou de laboratoires.

Il existe des dispositifs de traitement d'eau polluée par du mercure qui utilisent des agents réducteurs.

Le principe le plus utilisé comprend deux étapes. Une étape de réduction qui comporte une étape d'ajout d'un agent réducteur dans l'eau polluée par du mercure ionique dissous ou du mercure élémentaire ionique, finement divisé ou colloïdal, ce qui entraine la précipitation du mercure. Une étape d'extraction dans laquelle le mercure est extrait soit par filtration, soit par distillation.

Les documents GB1368966, BE818422 ou US3857704 traitent de l'utilisation de fer, principalement sous forme de sulfate ferreux ou de copeaux de fer ou d'acier, pour la dépollution des eaux mercurielles. Dans ce cas, le fer est ajouté directement dans l'eau en milieu infiniment mélangé pour réaliser l'étape de réduction. Cette étape nécessite une régulation de pH qui complexifie le procédé.

Dans le document US5635073 par exemple, une solution d'ions ferreux est introduite dans un milieu aqueux à traiter, avec un oxydant.

Il existe aussi des brevets qui portent sur la réduction du mercure par un composé soufré tels que le Na₂S (CN102372377) ou l'hydrosulfite (GB1350703), ce qui permet la formation de sulfure de mercure (HgS) insoluble. Une fois le mercure insolubilisé, il est extrait de l'eau par distillation (ce qui est par exemple décrit par les documents US3857704 ou GB1368966) ou filtration (BE818422, GB1339261, GB1350703, US4098697, CN102372377).

La récupération du mercure insolubilisé sur filtre est aussi largement décrite dans la littérature. Les supports filtrants sont de différentes formes allant de la simple filtration physique avec l'utilisation de sable (CN102372377 par exemple) ou de charbon actif (US6165366) à la distillation qui consiste à faire buller un gaz inerte dans l'eau pour volatiliser le mercure puis à traiter les vapeurs mercurielles.

Or, l'eau contient généralement de l'oxygène dissout et d'autres composés (nitrates, sulfates...) capables d'oxyder le fer. Selon le type d'oxydation (Fe(0) en Fe(II), ou Fe(II) en Fe(III)) qui occasionne un gonflement des particules de fer, lorsque le fer est utilisé comme média filtrant, une prise en masse des fragments de fer entre eux et/ou une formation de précipités d'oxydes et d'hydroxydes de fer se produit entrainant, dans les deux cas, un colmatage rapide du fer.

Les documents US2007/017871 et WO2005/061391 concernent par exemple un matériau filtrant revêtu d'oxyde ou d'oxyhydroxyde métallique.

Le document US2007/104949 concerne par exemple un granulé de brisures de verre comprenant des inclusions d'une substance active.

Les systèmes connus de l'art antérieur sont donc complexes et/ou peu satisfaisants ; les procédés associés comprennent de nombreuses étapes successives, également complexes, et ont pour but de récupérer le mercure contenu dans l'eau.

Au moins un des objectifs de la présente demande est ainsi de résoudre, au moins en partie, les inconvénients précités, en menant en outre à d'autres avantages.

A cet effet, est proposé, selon un premier aspect, un dispositif de traitement d'eau polluée au mercure comportant : une enceinte contenant un réactif de filtration, une arrivée d'eau à traiter dans l'enceinte en amont du réactif de filtration et une sortie d'eau traitée de l'enceinte en aval du réactif de filtration, caractérisé en ce que le réactif de filtration comporte un mélange de fer et d'un support granulaire chimiquement inerte, c'est-à-dire un support de particules chimiquement inertes.

Le support granulaire chimiquement inerte comporte par exemple du sable et/ou du gravier siliceux, des billes de silice, de verre, voire éventuellement de certaines matières plastiques.

Dans un mode de réalisation privilégié, le support granulaire chimiquement inerte comporte du sable, notamment du sable siliceux qui est en outre particulièrement économique.

Un tel dispositif permet ainsi de regrouper la réduction et la rétention du mercure, dans un seul dispositif, simple, de filtration, tout en conservant l'efficacité du traitement. Un tel dispositif permet ainsi la filtration directe d'eau polluée par du mercure sur un réactif granulaire.

Ce dernier, composé principalement d'un mélange de fer et d'un support granulaire inerte, par exemple et de manière économique de sable siliceux, permet à la fois la réduction des formes élémentaires du mercure et leur piégeage dans le filtre.

Les eaux mercurielles traversent le mélange, perméable, et les formes solubles du mercure sont réduites et insolubilisées au contact du fer.

Le mercure réduit reste piégé dans le mélange qui se charge progressivement en mercure jusqu'à saturation et élimination, c'est-à-dire qu'il est simplement possible de changer au moins le mélange lorsqu'il est saturé.

Dans un tel dispositif, le support granulaire permet d'assurer, lorsque la proportion de fer est limitée dans le mélange, une distance entre chaque grain de fer, limitant le contact direct fer/fer et par voie de conséquence le colmatage du réactif.

La granulométrie du support granulaire est choisie en fonction de celle du fer utilisé de façon à respecter les lois de non ségrégation du fer par gravité et/ou par contre-lavage.

Dans un exemple de réalisation, pour mieux contribuer à éviter la ségrégation ou la séparation gravitaire du fer dans le support inerte, un rapport N = D15 / d85 - avec D15 correspondant au diamètre passant du support granulaire à 15% en masse et d85 au diamètre passant du fer à 85 % en masse - est égal ou inférieur à 11 ; voire de préférence, N est compris entre environ 3 et environ 5. Ainsi, le fer ne peut se séparer du mélange par effet d'érosion ou par gravité quel que soit le débit de filtration qui traverse le réactif de filtration.

Le fer est utilisé pour son pouvoir réducteur. Cet agent réducteur peut être indifféremment du fer ou un alliage contenant du fer tel que de l'acier (non inoxydable) ou de la fonte.

En d'autres termes, du « fer » désigne donc ici du fer zéro valent, c'est-à-dire métallique, qui a un fort pouvoir réducteur, et non des oxydes, hydroxydes, ou oxyhydroxydes de fer par exemple.

En tant que réducteur, la réactivité du fer est directement proportionnelle à sa surface développée.

Ainsi différents types de fer peuvent être utilisés : le fer est par exemple sous forme de grenaille, et/ou de poudre et/ ou de copeau, et/ou toute autre forme fractionnée permettant la pénétration de l'eau. Chaque forme développe une surface de contact et une perméabilité différente. Le type de fer est en outre choisi pour ne pas apporter de pollution supplémentaire à l'aval du réactif de filtration, en particulier de pollution métallique comme pourrait le faire du zinc par exemple.

Dans un exemple de réalisation privilégié, le mélange comporte entre environ 1 % et environ 50 % en masse de fer, de préférence entre environ 1 % et environ 25 % en masse, voire encore de préférence entre environ 5 % et environ 20 % en masse. De telles proportions permettent de limiter un colmatage du mélange (les grains de fer en s'oxydant gonflent et se soudent entre eux). De plus, la durée de vie du mélange dépend notamment de la proportion de fer : dans une certaine mesure, plus il y a de fer, plus la durée de vie est longue pour une même granulométrie.

Selon l'invention au moins un additif est ajouté au mélange fer-support granulaire. Par exemple, le réactif de filtration comporte au moins un additif entre 0 % et environ 5 % en masse par rapport à la masse totale du réactif de filtration, afin d'optimiser le traitement et/ou d'agir sur la portée du traitement en cas de pollution au mercure, c'est-à-dire de pollution mixte ou co-pollution. En cas de plusieurs additifs, l'ensemble des additifs est de préférence inférieur à environ 5 % en masse. Autrement dit, le réactif de filtration comporte au moins environ 95% en masse du mélange fer-support granulaire.

Selon l'invention, l'au moins un additif comporte du soufre élémentaire, ce qui permet la formation de sulfure mercurique (HgS) et permet ainsi de stabiliser chimiquement le mercure réduit.

Et/ou par exemple, l'au moins un additif comporte au moins une résine échangeuse d'ions spécifique pour capter certaines pollutions métalliques comme le chrome hexavalent, polluant récurrent des nappes phréatiques. Une telle résine est par exemple une résine dont le groupement fonctionnel est de type ammonium quaternaire.

Et/ou par exemple, l'au moins un additif comporte du charbon actif, pour capter les pollutions organiques.

Dans un exemple de mise en oeuvre, l'au moins un additif est mélangé dans la masse du mélange fer-support granulaire.

Dans un autre exemple de mise en oeuvre, l'au moins un additif constitue au moins une couche indépendante, implantée en amont et/ou en aval du mélange fer-support granulaire.

Selon un exemple intéressant, le réactif de filtration peut comporter plusieurs couches configurées pour être successivement traversées par l'eau à traiter.

Par exemple, si l'eau à traiter contient beaucoup d'éléments oxydants (par exemple O₂, NOs, SO₄ ou autres), le mélange fer-support granulaire traitant le mercure est de préférence précédé d'une couche de préfiltration ayant une perméabilité au moins dix fois supérieure à celle du mélange fer-support granulaire, c'est-à-dire ayant une granulométrie supérieure, par exemple ayant des granules de fer de 2 mm mélangées dans du sable à 1-2 mm, et enrichie en fer par rapport au mélange fer-support granulaire, de façon à éliminer un maximum d'oxygène, mais avec une teneur en fer restant inférieure à 50% en masse. La teneur en fer de cette couche de préfiltration est par exemple comprise entre environ 20 % et environ 40 % en masse. Cette couche a par exemple pour rôle de consommer la majeure partie des oxydants présents dans l'eau à traiter et donc de protéger le mélange fer-support granulaire, lequel est dédié au mercure. Cette couche de préfiltration réduit également le risque de colmatage du réactif de filtration.

En d'autre terme, le réactif de filtration comporte par exemple possiblement une couche de préfiltration en amont d'au moins le mélange fer-support granulaire, la couche de préfiltration ayant une perméabilité au moins dix fois supérieure à celle du mélange fer-support granulaire et/ou une teneur en fer par exemple comprise entre environ 20 % et environ 40 % en masse.

Est aussi proposé, selon un autre aspect, un mélange de traitement d'eau polluée au mercure comportant du fer et un support granulaire chimiquement inerte ; lequel comporte par exemple du sable et/ou du gravier siliceux, des billes de silice, de verre, voire éventuellement de certaines matières plastiques, de préférence du sable.

Un tel mélange comporte par exemple tout ou partie des caractéristiques décrites précédemment, indépendamment du dispositif.

Est notamment proposé, une utilisation d'un tel mélange comportant du fer et un support granulaire chimiquement inerte pour traiter une eau polluée au mercure.

En particulier, un tel mélange est avantageusement utilisé dans un dispositif tel que décrit précédemment.

Est aussi proposé, selon encore un autre aspect, un procédé de traitement d'eau polluée au mercure par un dispositif comportant tout ou partie des caractéristiques décrites précédemment, comportant :
- Une étape d'introduction d'un volume d'eau dans l'enceinte du dispositif par l'arrivée d'eau du dispositif ;
- Une étape de transit du volume d'eau en contact avec le réactif de filtration, pendant un temps de séjour égal ou inférieur à deux heures, par exemple compris entre environ cinq minutes et environ vingt minutes ;
- Une étape de précipitation du mercure, avec le fer du mélange fer-support granulaire du réactif de filtration, comportant une étape de réduction du mercure et une étape de formation de microgouttelettes de mercure ;
- Une étape de formation de sulfure mercurique (HgS) par réaction du mercure réduit et du soufre élémentaire ; et
- Une étape d'extraction du volume d'eau hors du dispositif par la sortie d'eau du dispositif.

Le procédé présente ainsi des avantages analogues à ceux décrits en lien avec le dispositif.

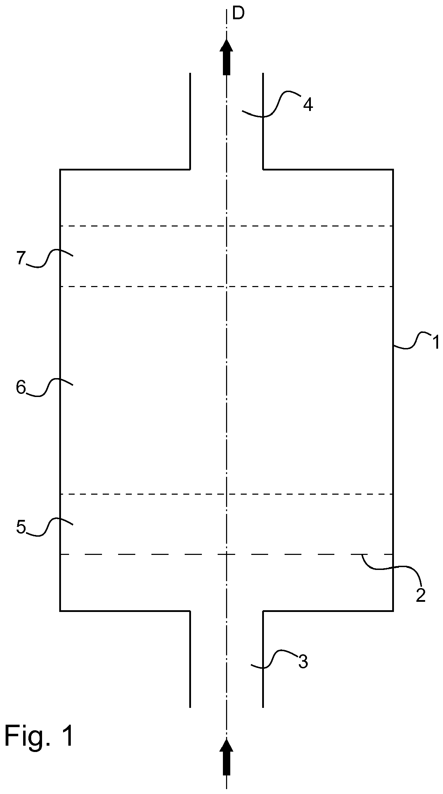

L'invention, selon un exemple de réalisation, sera bien comprise et ses avantages apparaitront mieux à la lecture de la description détaillée qui suit, donnée à titre indicatif et nullement limitatif, en référence à la figure 1 qui présente une coupe transversale schématique d'un dispositif selon un exemple de réalisation de l'invention.

Le dispositif comporte principalement une enceinte 1.

Une telle enceinte, ou cuve, a typiquement une forme globalement cylindrique. Elle est généralement réalisée en acier inoxydable ou en Polyéthylène haute densité. L'enceinte comporte souvent par exemple une trappe d'accès permettant d'accéder dans l'enceinte et/ou, par exemple, pour la remplir et/ou la vider de réactif de filtration.

Il s'agit par exemple d'une cuve d'une capacité de quelques mètres cubes, par exemple de 1 m³ à plusieurs mètres cubes.

Le dispositif comporte une arrivée 3 d'eau à traiter dans l'enceinte 1, par exemple sous forme d'un canal traversant une paroi de l'enceinte 1 d'un côté de l'enceinte, et une sortie 4 d'eau traitée hors de l'enceinte, également par exemple sous forme d'un canal traversant la paroi de l'enceinte 1 d'un autre côté de l'enceinte.

Ici la sortie 4 est opposée à l'arrivée 3 selon un axe D de l'enceinte qui s'étend généralement verticalement.

En particulier, l'arrivée 3 est ici formée en bas de l'enceinte 1 et la sortie 4 est formée en haut de l'enceinte 1 de sorte que l'eau entre à une base de l'enceinte 1 puis la traverse verticalement jusqu'à la sortie 4, selon un écoulement ascendant. Selon un autre exemple de réalisation non représenté, il pourrait en être autrement de sorte que l'écoulement serait alors descendant.

L'enceinte 1 est aussi ici équipée d'une grille 2.

La grille 2 est par exemple disposée entre l'arrivée 3 et la sortie 4, ici vers la base de l'enceinte, c'est-à-dire dans le présent exemple de réalisation plus près de l'arrivée 3 que de la sortie 4.

En outre, elle est disposée selon une section de l'enceinte 1 en travers de son axe D. Autrement dit, la grille est disposée pour être traversée par l'écoulement d'eau traversant l'enceinte entre l'arrivée 3 et la sortie 4. La grille 2 favorise ainsi une meilleure homogénéité de répartition de l'eau sur toute une section de l'enceinte.

Le dispositif comporte en outre, dans l'enceinte, un réactif de filtration 5, 6, 7.

Le réactif de filtration repose sur la grille 2.

Ainsi, ici, le réactif de filtration est disposé entre la grille 2 et la sortie 4, de sorte que de l'eau à traiter pénètre dans l'enceinte par l'arrivée 3, traverse la grille 2, le réactif de filtration 5, 6, 7, puis, une fois traitée, sort de l'enceinte par la sortie 4.

L'arrivée 3 d'eau à traiter dans l'enceinte est en amont du réactif de filtration 5, 6, 7 et la sortie 4 d'eau traitée hors de l'enceinte est en aval du réactif de filtration.

Dans le présent exemple de réalisation, le réactif de filtration comporte plusieurs couches, en particulier trois couches. Lorsque le dispositif est utilisé, l'eau traverse ainsi successivement les différentes couches de réactif de filtration, en particulier ici une première couche 5, une deuxième couche 6 et enfin une troisième couche 7, dans cet ordre.

Ici, la première couche 5 du réactif de filtration est par exemple une couche de préfiltration. Une telle couche est par exemple configurée pour éliminer de l'oxygène dissout dans l'eau.

La deuxième couche 6 du réactif de filtration comporte par exemple un mélange de fer et de sable configuré pour réduire et accumuler du mercure polluant l'eau à traiter.

La troisième, et ici dernière, couche 7 du réactif de filtration est par exemple une couche de post-filtration comportant par exemple des granules de charbon actif.

Les épaisseurs et volumes de chacune des couches sont par exemple calculés en fonction d'un temps de séjour nécessaire et/ou voulu.

Un exemple de mise en oeuvre d'un mélange fer-sable pour un dispositif de traitement d'eau polluée au mercure a été étudié en laboratoire et est décrit ci-dessous.

**Tableau 1 : Caractéristiques de l'essai**

| **Paramètre** | **Unité** | **Valeurs** |
|---|---|---|
| Rapport Fer/Sable | m/m | 10/90 |
| Granulométrie du fer | µm | 80-140 |
| Granulométrie du sable | mm | 0-4 |
| Charge volumique | m³/h/m³ | 6,0 |
| Temps de séjour | min | 10 |

Le pourcentage de fer dans le mélange fer-sable est de 10 % en masse (l'unité m/m dans le tableau 1 signifiant masse/masse). La granulométrie du fer est comprise entre 80 µm et 140 µm et celle du sable siliceux entre 0 mm et 4 mm. La charge volumique représente un rapport entre le débit d'eau en m³/heure et le volume de réactif de filtration en m³.

Une eau polluée par du mercure métallique (Hg⁰, SUEZ CHEMICALS) et/ou du mercure ionique (Hg²⁺) a été utilisée.

En particulier, 5 L (cinq litres) d'eau à traiter ont été dopés par mercure sous forme métallique Hg⁰ et ionique bivalent HgCl₂ de la manière suivante.

Quelques gouttelettes de mercure ont été placées dans les 5 L d'eau. L'ensemble a été placé sur un banc à retournement pendant quatre (4) heures. Après mélange, la concentration en mercure dans l'eau est de 15 µg/L.

Ensuite, la concentration en mercure a été ajustée à 30 µg/L par ajout de HgCl₂ (ajout de 80 µL d'une solution à 1 g/L de HgCl₂).

Différents essais ont été réalisés avec une concentration en mercure total dans l'eau comprise entre environ 10 µg/L et environ 400 µg/L, comme le récapitule le tableau ci-dessous.

**Tableau 2 : Résultats de l'essai**

| ***Concentration d'entrée du mercure (Hg⁰ et*/*ou Hg²⁺) dans l'eau à traiter*** | ***Concentration de sortie du mercure (Hg⁰ et*/*ou Hg²⁺) dans l'eau traitée*** | ***Abattement*** |
|---|---|---|
| *µg*/*L* | *µg*/*L* | % |
| 11,0 | <1 | 100 |
| 13,5 | <1 | 100 |
| 29,7 | <1 | 100 |
| 30,5 | <1 | 100 |
| 155 | <1 | 100 |
| 176 | 7,6 | 96 |
| 198 | 12,8 | 94 |
| 361 | 3,1 | 99 |
| 389 | 11,8 | 97 |

L'eau polluée par mercure est pompée à l'aide d'une pompe péristaltique puis traverse le mélange fer-sable à 10% disposé dans une cartouche filtrante de 10 mL d'un élancement de 5. Le mercure est dosé en entrée et en sortie (par exemple par SAA - spectrométrie d'absorption atomique - (analyseur Hg3000, SMT)).

Le débit de la pompe péristaltique est fixé à 1 mL/min.

Dans un premier temps, de l'eau polluée à environ 30 µg/L a circulé à travers la cartouche puis l'eau plus concentrée à 400 µg/L.

L'eau polluée à environ 30 µg/L en mercure est traitée en totalité après passage dans le mélange.

La concentration résiduelle, en sortie de cartouche, est très inférieure à 1,0 µg/L. L'abattement est considéré de 100 % à cette concentration.

Pour des concentrations plus élevées, par exemple de l'ordre de 200 µg/L, la concentration résiduelle maximale mesurée est d'environ 12,8 µg/L. L'abattement est donc supérieur à 93,5%, pour un temps de séjour de seulement 10 minutes.

## Revendications

1. Dispositif de traitement d'eau polluée au mercure comportant : une enceinte (1) contenant un réactif de filtration (5, 6, 7), une arrivée (3) d'eau à traiter dans l'enceinte (1) en amont du réactif de filtration (5, 6, 7) et une sortie (4) d'eau traitée de l'enceinte (1) en aval du réactif de filtration (5, 6, 7), le réactif de filtration (5, 6, 7) comportant un mélange (6) de fer et d'un support granulaire chimiquement inerte, où le fer est utilisé pour son pouvoir réducteur et est du fer métallique ou un alliage contenant du fer, **caractérisé en ce que** le réactif de filtration comporte en outre au moins un additif, l'au moins un additif comportant du soufre élémentaire.

2. Dispositif selon la revendication 1, **caractérisé en ce que** un rapport N = D15 / d85, avec D15 correspondant au diamètre passant du support granulaire à 15% en masse et d85 au diamètre passant du fer à 85 % en masse, est égal ou inférieur à 11, de préférence est compris entre environ 3 et environ 5.

3. Dispositif selon l'une quelconque des revendications 1 ou 2, **caractérisé en ce que** le fer est sous forme de grenaille, de poudre et/ou de copeau, ou toute autre forme fractionnée permettant la pénétration de l'eau.

4. Dispositif selon l'une quelconque des revendications 1 à 3, **caractérisé en ce que** le support granulaire chimiquement inerte comporte du sable et/ou du gravier siliceux, des billes de silice, de verre, voire de matières plastiques.

5. Dispositif selon l'une quelconque des revendications 1 à 4, **caractérisé en ce que** le mélange (6) comporte entre environ 1 % et environ 50 % en masse de fer, de préférence entre environ 1 % et environ 25 % en masse, voire encore de préférence entre environ 5 % et environ 20 % en masse.

6. Dispositif selon l'une quelconque des revendications 1 à 5, **caractérisé en ce que** l'au moins un additif comporte au moins une résine échangeuse d'ions spécifique.

7. Dispositif selon l'une quelconque des revendications 1 à 6, **caractérisé en ce que** l'au moins un additif comporte du charbon actif.

8. Dispositif selon l'une quelconque des revendications1 à 7, **caractérisé en ce que** l'au moins un additif est mélangé dans la masse du mélange fer-support granulaire.

9. Dispositif selon l'une quelconque des revendications 1 à 8, **caractérisé en ce que** l'au moins un additif constitue au moins une couche indépendante, implantée en amont et/ou en aval du mélange (6) fer-support granulaire.

10. Dispositif selon l'une quelconque des revendications 1 à 9, **caractérisé en ce que** le réactif de filtration (5, 6, 7) comporte plusieurs couches configurées pour être successivement traversées par l'eau à traiter.

11. Dispositif selon la revendication 10, **caractérisé en ce que** le réactif de filtration (5, 6, 7) comporte une couche de préfiltration (5) en amont d'au moins le mélange (6) fer-support granulaire, la couche de préfiltration (5) ayant une perméabilité au moins dix fois supérieure à celle du mélange (6) fer-support granulaire et/ou une teneur en fer comprise entre environ 20 % et environ 40 % en masse.

12. Utilisation d'un mélange (6) comportant du fer et un support granulaire chimiquement inerte dans un réactif de filtration pour traiter une eau polluée au mercure, où le fer est utilisé pour son pouvoir réducteur et est du fer métallique ou un alliage contenant du fer, et le réactif de filtration comportant en outre au moins un additif, l'au moins un additif comportant du soufre élémentaire.

13. Procédé de traitement d'eau polluée au mercure par un dispositif selon l'une quelconque des revendications 1 à 11, comportant :
- Une étape d'introduction d'un volume d'eau dans l'enceinte (1) du dispositif par l'arrivée d'eau (3) du dispositif ;
- Une étape de transit du volume d'eau en contact avec le réactif de filtration (5, 6, 7), pendant un temps de séjour égal ou inférieur à deux heures ;
- Une étape de précipitation du mercure, avec le fer du mélange (6) fer-support granulaire du réactif de filtration (5, 6, 7), comportant une étape de réduction du mercure et une étape de formation de microgouttelettes de mercure ;
- Une étape de formation de sulfure mercurique (HgS) par réaction du mercure réduit et du soufre élémentaire ; et
- Une étape d'extraction du volume d'eau hors du dispositif par la sortie d'eau (4) du dispositif.

## Patentansprüche

1. Vorrichtung zur Behandlung von mit Quecksilber verschmutztem Wasser, Folgendes beinhaltend: Eine Einschließung (1), die ein Filterungsreagens (5, 6, 7) enthält, einen Zulauf (3) für zu behandelndes Wasser in die Einschließung (1) stromaufwärts des Filterungsreagens (5, 6, 7) gelegen, und einen Auslauf (4) für behandeltes Wasser der Einschließung (1) stromabwärts des Filterungsreagens (5, 6, 7) gelegen, wobei das Filterungsreagens (5, 6, 7) eine Mischung (6) aus Eisen und einen chemisch inerten körnigen Träger beinhaltet, wobei das Eisen aufgrund seines Reduktionsvermögens verwendet wird, und metallisches Eisen oder eine Legierung ist, die Eisen enthält, **dadurch gekennzeichnet, dass** das Filterungsreagens weiter mindestens ein Additiv beinhaltet, wobei das mindestens eine Additiv elementaren Schwefel beinhaltet.

2. Vorrichtung nach Anspruch 1, **dadurch gekennzeichnet, dass** ein Verhältnis N = D15/d85, wobei D15 dem Durchgangsdurchmesser des körnigen Trägers mit 15 Ma.-% entspricht, und d85 dem Durchgangsdurchmesser des Eisens mit 85 Ma.-% entspricht, kleiner oder gleich 11 ist, vorzugsweise zwischen etwa 3 und etwa 5 liegt.

3. Vorrichtung nach einem der Ansprüche 1 oder 2, **dadurch gekennzeichnet, dass** das Eisen in Form von Schrot, Pulver und/oder Span, oder jeder anderen aufgesplitterten Form ist, welche das Eindringen von Wasser erlaubt.

4. Vorrichtung nach einem der Ansprüche 1 bis 3, **dadurch gekennzeichnet, dass** der chemisch inerte körnige Träger Sand und/oder Quarzkies, Kügelchen aus Kieselsäure, Glas, oder gar Kunststoffmaterialien beinhaltet.

5. Vorrichtung nach einem der Ansprüche 1 bis 4, **dadurch gekennzeichnet, dass** die Mischung (6) zwischen etwa 1 Ma.-% und etwa 50 Ma.-% an Eisen, vorzugsweise zwischen 1 Ma.-% und etwa 25 Ma.-%, oder gar noch bevorzugter zwischen etwa 5 Ma.-% und etwa 20 Ma.-% beinhaltet.

6. Vorrichtung nach einem der Ansprüche 1 bis 5, **dadurch gekennzeichnet, dass** das mindestens eine Additiv mindestens ein spezielles Ionentauscherharz beinhaltet.

7. Vorrichtung nach einem der Ansprüche 1 bis 6, **dadurch gekennzeichnet, dass** das mindestens eine Additiv Aktivkohle beinhaltet.

8. Vorrichtung nach einem der Ansprüche 1 bis 7, **dadurch gekennzeichnet, dass** das mindestens eine Additiv in die Masse der Mischung aus Eisen-körnigem Träger gemischt ist.

9. Vorrichtung nach einem der Ansprüche 1 bis 8, **dadurch gekennzeichnet, dass** das mindestens eine Additiv mindestens eine unabhängige Schicht darstellt, die stromaufwärts und/oder stromabwärts der Mischung (6) aus Eisen-körnigem Träger gelegen eingelassen ist.

10. Vorrichtung nach einem der Ansprüche 1 bis 9, **dadurch gekennzeichnet, dass** das Filterungsreagens (5, 6, 7) mehrere Schichten beinhaltet, die konfiguriert sind, um nach und nach von dem zu behandelnden Wasser durchquert zu werden.

11. Vorrichtung nach Anspruch 10, **dadurch gekennzeichnet, dass** das Filterungsreagens (5, 6, 7) eine Vorfilterungsschicht (5) stromaufwärts von mindestens der Mischung (6) aus Eisen-körnigem Träger gelegen beinhaltet, wobei die Vorfilterungsschicht (5) eine Durchlässigkeit mindestens zehn Mal größer als jene der Mischung (6) aus Eisen-körnigem Träger, und/oder einen Eisengehalt aufweist, der zwischen etwa 20 Ma.-% und etwa 40 Ma.-% liegt.

12. Verwendung einer Mischung (6), welche Eisen und einen chemisch inerten körnigen Träger beinhaltet, in einem Filterungsreagens, zur Behandlung von mit Quecksilber verschmutztem Wasser, wobei das Eisen aufgrund seines Reduktionsvermögens verwendet wird, und metallisches Eisen oder eine Legierung ist, die Eisen enthält, und das Filterungsreagens weiter mindestens ein Additiv beinhaltet, wobei das mindestens eine Additiv elementaren Schwefel beinhaltet.

13. Verfahren zur Behandlung von mit Quecksilber verschmutztem Wasser durch eine Vorrichtung nach einem der Ansprüche 1 bis 11, Folgendes beinhaltend:
- Einen Schritt zum Einbringen eines Volumens an Wasser in die Einschließung (1) der Vorrichtung durch den Wasserzulauf (3) der Vorrichtung;
- Einen Schritt zum Durchführen des Wasservolumens in Kontakt mit dem Filterungsreagens (5, 6, 7), eine Aufenthaltsdauer kleiner oder gleich zwei Stunden lang;
- Einen Schritt zum Ausfällen des Quecksilbers, mit dem Eisen der Mischung (6) aus Eisen-körnigem Träger des Filterungsreagens (5, 6, 7), der einen Schritt zur Reduktion des Quecksilbers und einen Schritt zum Bilden von Quecksilber-Mikrotröpfchen beinhaltet;
- Einen Schritt zum Bilden von Quecksilbersulfid (HgS) durch Reaktion des reduzierten Quecksilbers und des elementaren Schwefels; und
- Einen Schritt zum Extrahieren des Wasservolumens aus der Vorrichtung durch den Wasserauslauf (4) der Vorrichtung.

## Claims

1. A device for treating mercury-polluted water including: an enclosure (1) containing a filtration reagent (5, 6, 7), an inlet (3) for water to be treated in the enclosure (1) upstream of the filtration reagent (5, 6, 7) and an outlet (4) for treated water from the enclosure (1) downstream of the filtration reagent (5, 6, 7), the filtration reagent (5, 6, 7) comprising a mixture (6) of iron and a chemically inert granular support, wherein the iron is used for its reducing power and is metallic iron or an iron-containing alloy, **characterised in that** the filtration reagent further includes at least one additive, the at least one additive comprising elemental sulphur.

2. The device according to claim 1, **characterised in that** a ratio N = D15 / d85, with D15 corresponding to the diameter through which 15 wt.% granular support passes and d85 to the diameter through which 85 wt.% iron passes, is equal to or less than 11, preferably is between about 3 and about 5.

3. The device according to any of claims 1 or 2, **characterised in that** the iron is in the form of shot, powder and/or chip, or any other fractionated form allowing water penetration.

4. The device according to any of claims 1 to 3, **characterised in that** the chemically inert granular support includes sand and/or silica gravel, silica beads, glass, or even plastic materials.

5. The device according to any of claims 1 to 4, **characterised in that** the mixture (6) includes between about 1% and about 50% by mass, preferably between about 1% and about 25% by mass, even more preferably between about 5% and about 20% by mass of iron.

6. The device according to any of claims 1 to 5, **characterised in that** the at least one additive includes at least one specific ion exchange resin.

7. The device according to any of claims 1 to 6, **characterised in that** the at least one additive includes activated carbon.

8. The device according to any of claims 1 to 7, **characterised in that** the at least one additive is mixed into the bulk of the iron-granular support mixture.

9. The device according to any of claims 1 to 8, **characterised in that** the at least one additive constitutes at least one independent layer, implanted upstream and/or downstream of the iron-granular support mixture (6).

10. The device according to any of claims 1 to 9, **characterised in that** the filtration reagent (5, 6, 7) includes several layers so configured that water to be treated passes successively therethrough.

11. The device according to claim 10, **characterised in that** the filtration reagent (5, 6, 7) includes a pre-filtration layer (5) upstream of at least the iron-granular support mixture (6), the pre-filtration layer (5) having a permeability at least ten times higher than that of the iron-granular support mixture (6) and/or an iron content of between about 20% and about 40% by mass.

12. Use of a mixture (6) comprising iron and a chemically inert granular support in a filtration reagent for treating mercury-polluted water, wherein the iron is used for its reducing power and is metallic iron or an iron-containing alloy, and the filtration reagent further including at least one additive, the at least one additive comprising elemental sulphur.

13. A method for treating mercury-polluted water by a device according to any of claims 1 to 11, including:
- a step of introducing a volume of water into the enclosure (1) of the device through the water inlet (3) of the device;
- a step of transiting the volume of water in contact with the filtration reagent (5, 6, 7), for a residence time equal to or less than two hours;
- a step of precipitating mercury, with the iron of the iron-granular support mixture (6) of the filtration reagent (5, 6, 7), including a step of reducing mercury and a step of forming mercury micro-droplets;
- a step of forming mercuric sulphide (HgS) by reacting the reduced mercury with the elemental sulphur; and
- a step of extracting the volume of water from the device through the water outlet (4) of the device.
